# EUROPEAN PATENT SPECIFICATION

(11) **EP 4 576 048 B1**
(45) Date of publication and mention of the grant of the patent: **19.11.2025**
(21) Application number: 24020261.4
(22) Date of filing: 08.08.2024
(51) Int. Cl.: G09B 1/06, G09B 19/00

(54) **MODULAR SPATIAL MEMORY AID SYSTEM FOR ENHANCED LEARNING AND INFORMATION RECALL**
MODULARES RÄUMLICHES SPEICHERUNTERSTÜTZUNGSSYSTEM FÜR VERBESSERTES LERNEN UND INFORMATIONSABRUF
SYSTÈME MODULAIRE D'AIDE À LA MÉMOIRE SPATIALE POUR APPRENTISSAGE ET RAPPEL D'INFORMATIONS AMÉLIORÉS

(30) Priority: 21.12.2023 GB 202319764
(43) Date of publication of application: 25.06.2025
(73) Proprietor: Schöne-de la Nuez, Frank Michael, 35043 Marburg (DE)
(72) Inventor: Schöne-de la Nuez, Frank Michael, 35043 Marburg (DE)

(56) References cited:
- US-A1- 2009 087 820
- US-A1- 2014 356 847

## Description

### Field of Invention.

The present invention relates generally to educational tools and methods, particularly to systems and devices designed for enhancing learning and memory recall through spatial and mnemonic techniques.

### Background

The realm of mnemonic devices and memory enhancement techniques is vast, encompassing various methods aimed at improving the retention and recall of information. Traditionally, these methods have included mental techniques such as the use of acronyms, story methods, and visual aids like diagrams and models. These approaches operate based on the Basic Trigger Mechanism (BTM), which essentially links sensory perceptions (triggers) to the recall of abstract information (responses). Among the well-known mental techniques are the acronym method, which leverages familiar images or words as triggers for complex information, and combined mental/physical techniques such as flashcards and the LOCI method, where learners associate information with specific physical locations.

The Spaced-Repetition System (SRS), also known as the Leitner System, represents a significant advancement in this field. It employs a card system with varied repetition frequencies to facilitate memory. This method has shown efficacy in aiding the retention of information over extended periods. However, despite its effectiveness, the SRS and similar methods exhibit notable limitations, particularly in their engagement with the sensory experiences of learners. Many of these traditional mnemonic techniques do not fully engage all senses, often exclude physical movement, fail to utilize three-dimensional spatial memory, and are less effective in handling complex information forms, such as diagrams.

A critical observation in the field of memory and learning is the distinction between two types of information: Biological Priority Information (BPI), which is essential for survival, and Learner Priority Information (LPI), which is crucial for academic or professional success. Human memory systems inherently prioritize BPI over LPI, leading to a phenomenon the inventor refers to as the Information Crowding Out (ICO) effect. This effect manifests when LPI is overshadowed or displaced by new or more biologically relevant BPI. While systems like SRS address this issue to some extent through spaced repetition, they still struggle with the retention and recall of complex knowledge, particularly in the form of detailed diagrams or intricate concepts.

The invention described herein aims to address these gaps by developing a more holistic and effective system for the retention and recall of complex knowledge. It acknowledges the limitations of existing mnemonic methods that primarily focus on simpler data forms like vocabulary, neglecting the nuanced and layered nature of complex information that is increasingly vital in modern academic and professional environments. This invention seeks to bridge the gap between the traditional mnemonic techniques and the demands of complex information retention, employing a novel approach that integrates spatial memory capabilities, deeply rooted in the human survival instinct, with advanced mnemonic strategies.

This existing landscape of mnemonic devices, the inherent limitations of traditional methods, and the evolving needs of learners in retaining complex information form the context in which the invention is provided.

Document US 2009/087820 relates to an education learning providing method for educational learning system, involves placing flash card on position selected from sequential position from end position, and position from which flash card is taken, when solution is incorrect.

Document US 2014/356847 relates to a learning device for use in classroom setting, has rectangular bar that is subdivided into rectangles which include indicia indicating temporal direction and physical direction and space is provided below each square that is not printed.

### Summary

This invention generally relates to a learning device, designed specifically to enhance the storage and recall of information through mnemonic techniques that utilize spatial and physical memory associations. In its fundamental embodiment, the invention comprises a grid system, envisioned as a three-dimensional cubic structure. This system is composed of interconnected beams which define multiple container-receiving locations. These beams are dimensionally crafted to support a plurality of Container Units. Each Container Unit is adapted for removable engagement with the grid system and is configured to store various learning materials, including but not limited to Association Trigger Items.

In some embodiments, the invention further includes a plurality of Association Trigger Items. These items are chosen for their relevance to the specific learning content and are stored within the Container Units. The Container Units in certain examples may include internal hooks, enhancing the organization and accessibility of the Association Trigger Items.

In other embodiments, the learning device incorporates a set of Container Dividers. These Dividers are tailored to fit within the Container Units, thereby dividing each unit into multiple compartments. The compartments created by the Container Dividers can be labeled in some examples, facilitating the identification and categorization of Association Trigger Items.

The invention also encompasses Information Overview Cards in certain embodiments. These cards are specially designed for annotating and visualizing the relationships between learning content represented by the Association Trigger Items. This structured approach to information visualization plays a critical role in the mnemonic process enabled by the device.

A Box for Cards is also included in some embodiments of the invention. This box is configured to store and organize the Information Overview Cards, implementing a spaced repetition learning schedule. The Box for Cards may include dividers in some embodiments, which serve to segregate the Information Overview Cards based on different stages of the learning process.

In further embodiments, the container-receiving locations of the grid system are enhanced with a positioning code. This code might use a combination of colors, numbers, and alphanumeric positioning symbols to define specific locations within the grid system. In some examples, the positioning code comprises a combination of colors representing horizontal levels, numbers indicating depth, and alphanumeric symbols for specific location identification within the system.

Additionally, some embodiments of the learning device include Information Storage Bags. Each bag is sized to contain at least one Association Trigger Item and to fit within the compartments of the Container Units. These bags, in certain embodiments, are made from a flexible material and include a drawstring mechanism. They may be designed in various colors for categorization purposes.

In certain embodiments, the Container Units are rectangular boxes, with dimensions that allow stable placement on any beam of the grid system. This stability is ensured even when the Container Units are unevenly filled.

Moreover, in some embodiments, the grid system includes a magnetic mechanism for securing the Container Units at their respective locations. Each Container Unit may comprise magnetic elements on its base, aligning with corresponding magnetic elements on the grid system's beams to facilitate stable attachment.

### Brief Description of the Drawings

Various embodiments of the invention are disclosed in the following detailed description and accompanying drawings.

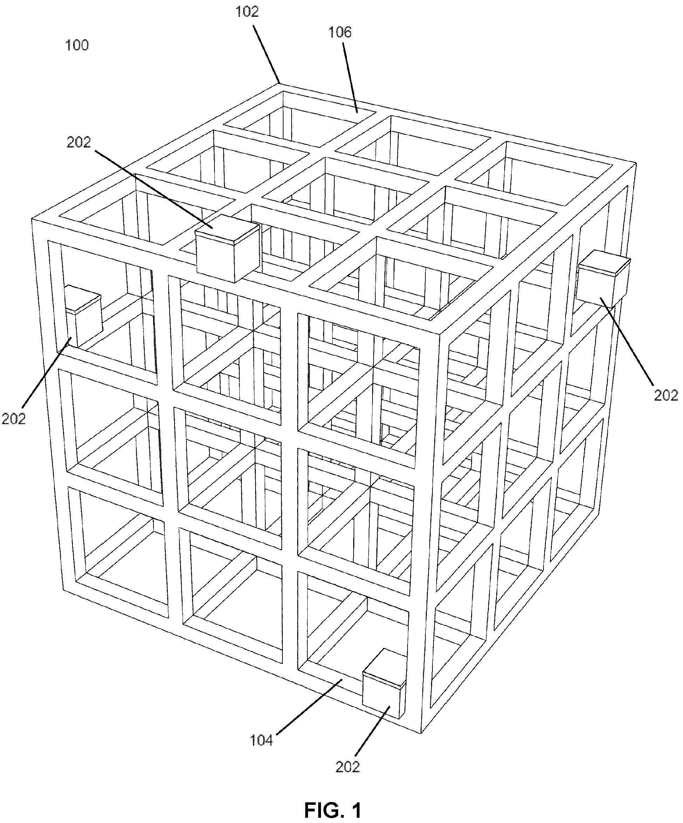

FIG. 1 illustrates the grid system (102) of the learning device (100). This figure shows the grid system as a cubic structure formed by interconnected horizontal and vertical beams (106). The horizontal beams (106) include upper surfaces (104) capable of supporting containers (202). The vertical beams are also depicted as potential container-receiving locations, accommodating containers through methods such as hooks or magnetic attachments.

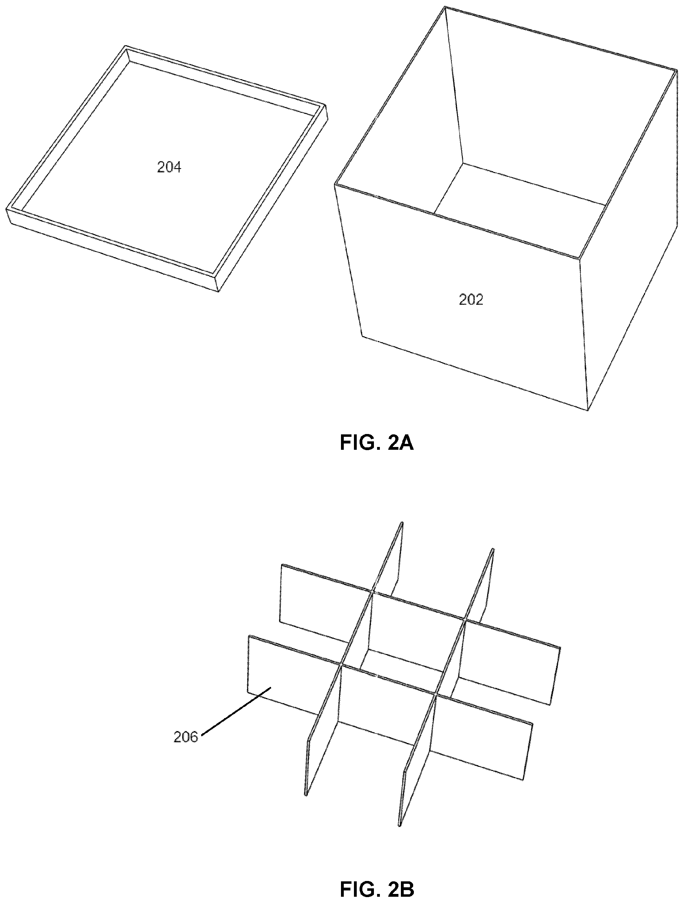

FIG. 2A presents an example of a container (202) used in the learning device. This figure shows the container as a simple hollow box equipped with a lid (204), illustrating its basic structure and form.

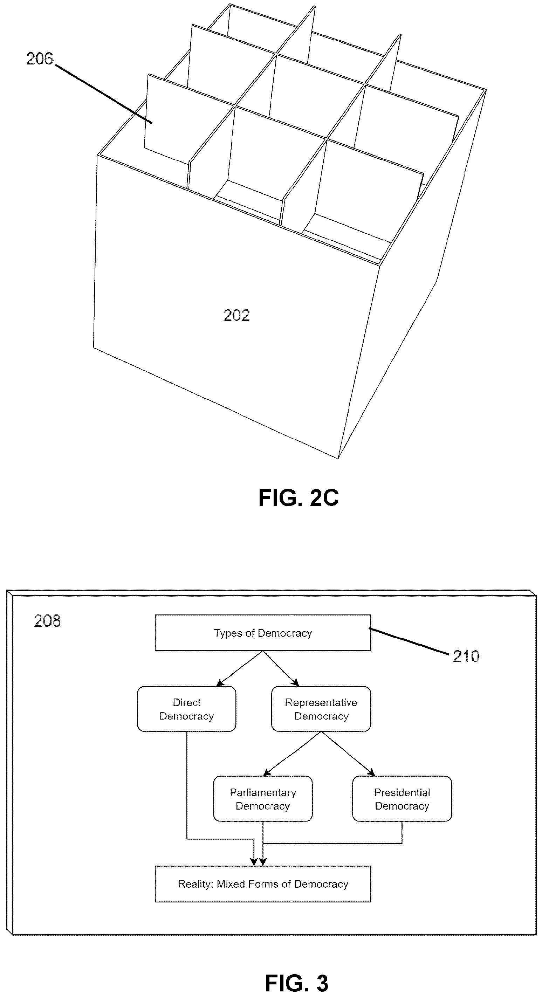

FIG. 2B and FIG. 2C depict Container Dividers (206). These figures illustrate how the Container Dividers can be used to segment the Container Unit (202) into various compartments, aiding in the organization and categorization of contents.
FIG. 3 displays an Information Overview Card (208) with a Simplifying Structured Diagram (210). The diagram exemplifies the breakdown of systems of government, the subject matter which the user aims to learn. This figure also indicates how the compartments in the container (202), formed by the dividers (206), correspond to different elements of the narrative, a story used in the memorization techniques of the present application, and the diagram itself. It should be noted that while a specific section of a box for cards is referenced for storing these cards, the actual box is not depicted in these drawings.

Common reference numerals are used throughout the figures and the detailed description to indicate like elements.

### Detailed Description

The following is a detailed description of exemplary embodiments to illustrate the principles of the invention. The embodiments are provided to illustrate aspects of the invention, but the invention is not limited to any embodiment. The scope of the invention is limited only by the claims.

Numerous specific details are set forth in the following description in order to provide a thorough understanding of the invention. However, the invention may be practiced according to the claims without some or all of these specific details. For the purpose of clarity, technical material that is known in the technical fields related to the invention has not been described in detail so that the invention is not unnecessarily obscured.

### DEFINITIONS:

The terminology used herein is for the purpose of describing particular embodiments only and is not intended to be limiting of the invention.

As used herein, the term "and/or" includes any combinations of one or more of the associated listed items.

As used herein, the singular forms "a," "an," and "the" are intended to include the plural forms as well as the singular forms, unless the context clearly indicates otherwise.

It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The term "grid system" as used herein refers to any structure or arrangement that provides a framework for positioning, organizing, and holding components. This term is intended to encompass various configurations and dimensions, including but not limited to cubic, rectangular, or other three-dimensional forms.

The phrase "Container Unit" as used herein is intended to broadly encompass any form of container, receptacle, or housing capable of holding or storing items. This includes, but is not limited to, boxes, drawers, pouches, or other forms of enclosures, whether rigid, semi-rigid, or flexible.

As used herein, "Association Trigger Item" refers to any object, symbol, or representation that facilitates memory recall or association. This term is intended to include items of various sizes, shapes, materials, and sensory characteristics, not limited to physical objects but also encompassing visual or auditory cues.

The term "Information Overview Card" as used herein encompasses any form of visual representation used to record, display, or organize information. This includes traditional cards, electronic displays, sheets, boards, or digital interfaces, irrespective of the material or technology used.

"Container Dividers" as used herein refers to any form of partition, separator, or organizing tool within a Container Unit. These dividers can be made of various materials and configurations, and the term is intended to include fixed, adjustable, removable, or foldable dividers.

The use of the term "Box for Cards" herein is intended to include any storage system for organizing cards or similar items. This term is not limited to physical boxes but extends to any form of container, holder, file, or digital system capable of organizing and storing cards or card-like items.

The term "positioning code" as used herein broadly refers to any system or method for identifying locations or positions within the grid system. This includes, but is not limited to, alphanumeric codes, colour codes, symbol-based codes, or any combination thereof.

The term "Information Storage Bag" as used herein is intended to broadly encompass any form of flexible storage medium suitable for containing items. This includes, but is not limited to, bags made from various materials, with different closure mechanisms, and in a range of sizes.

### Example Embodiments of the Invention

The present invention is a learning device designed to facilitate the storage and recall of information, particularly complex concepts such as government systems, through a mnemonic process involving both cognitive and physical interactions. Physically, the device 100 comprises a grid system 102 as shown in FIG.1 in the form of a cube formed of a number of equal length, interconnected horizontal and vertical beams 106. Each horizontal 106 beam has an upper surface 104 capable of supporting a container 202, and thus the grid system 102 forms a large number of container receiving locations. The vertical beams may also form container-receiving locations through various means such as hooks and magnetic attachments.

An example configuration of the containers 202 as simple hollow boxes with lids 204 is shown in FIG.2A. Container Dividers 206, as shown in FIG.2B and FIG.2C, may be used to segment the Container Unit 202 into compartments.

The containers 202 are used to store a number of association trigger items as described herein. In FIG.3, an example information overview card 208 is shown with a simplifying structured diagram 210 breaking down systems of government, which the user is trying to learn about. The compartments in the container 202 formed by the divider 206 are associated with different parts of the story and diagram. The Information Overview Card 208, annotated with the story and diagram 210, is stored in a specific section of a box for cards (not shown, but is generally a simple box container) for organizing the cards according to the spaced repetition learning method.

In the following example, a step-by-step process for how a user can make use of these components of the invention to learn such information is described.

Step 1: Comprehension and Diagram Creation: Initially, a user begins by comprehensively studying various government systems, such as democracy, autocracy, and monarchy. Utilizing an Information Overview Card, the user creates a Simplifying Structured Diagram. This diagram is a visual representation of the key concepts and their interrelations in a simplified and structured format, aiding in the cognitive processing of the information.

Step 2: Setting the Scene for Memory Association: The user then selects a familiar and detailed scenery, like a frequently visited park. A photograph of this park serves as a visual reference. Within this context, the user chooses an Association Trigger Item, such as a keychain, known for its tactile properties and ease of handling, to anchor the mnemonic process.

Step 3: Creating a Membrane: In this step, the user develops a story set within the chosen scenery. This narrative creatively links different areas of the park to the various government systems. Each story element correlates with a part of the Simplifying Structured Diagram, embedding the information in the user's memory.

Step 4: Physical Interaction and Storage: The Association Trigger Item is placed into an Information Storage Bag, then into a Container Unit. The user assigns a specific location for this Container Unit within the grid system, utilizing a colour and positioning code for accurate placement, such as "Yellow, 2, Beta."

### Step 5: Reinforcing Memory through Spatial Association

The user then physically places the Container Unit at the designated location in the grid system. This act reinforces the memory association through spatial interaction. To further enhance memory retention, the user frequently revisits the story, the Simplifying Structured Diagram, and the Container Unit's location.

Step 6: Retrieval and Application: For memory assessment, the user attempts to recreate the diagram from memory, using the keychain and the grid system as reference points. The knowledge gained is then applied in practical settings, like discussions or academic scenarios.

### Conclusion

Unless otherwise defined, all terms (including technical terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

The disclosed embodiments are illustrative, not restrictive.

## Claims

1. A learning device for facilitating the storage and recall of information, the device comprising:
a grid system, configured as a three-dimensional cubic structure with a plurality of interconnected beams defining a plurality of container-receiving locations;
a plurality of Container Units, each Container Unit being dimensionally adapted for removable engagement with the grid system at any of the plurality of container-receiving locations, and configured to store learning materials such as association trigger items; and
a plurality of Information Overview Cards, each card being configured for annotating information related to a mnemonic learning process;
wherein the grid system, Container Units, and Information Overview Cards collectively facilitate the mnemonic learning process based on spatial and physical memory associations.

2. The learning device of Claim 1, further comprising a plurality of Association Trigger Items, each item being selected for association with specific learning content and for storage within the Container Units.

3. The learning device of Claim 2, wherein each of the Container Units includes internal hooks for organizing the Association Trigger Items.

4. The learning device of Claim 1, further comprising a set of Container Dividers, each Divider being configured to fit within the Container Units, dividing each Container Unit into a plurality of compartments.

5. The learning device of Claim 4, wherein each compartment created by the Container Dividers is labeled for identification and categorization of Association Trigger Items.

6. The learning device of Claim 1, wherein each Information Overview Card includes a premade structure for visualizing relationships between learning content represented by Association Trigger Items.

7. The learning device of Claim 1, further comprising a Box for Cards, configured to store and organize the Information Overview Cards according to a spaced repetition learning schedule.

8. The learning device of Claim 7, wherein the Box for Cards includes dividers to segregate the Information Overview Cards based on different stages of the learning process.

9. The learning device of Claim 1, wherein the container-receiving locations of the grid system are labelled with a positioning code.

10. The learning device of Claim 9, wherein the positioning code employs a combination of colours, numbers, and alphanumeric positioning symbols for defining specific locations within the grid system.

11. The learning device of Claim 10, wherein the positioning code comprising a combination of colours representing horizontal levels, numbers indicating depth, and alphanumeric symbols for specific location identification within the system.

12. The learning device of Claim 1, further comprising Information Storage Bags, each bag being sized to contain at least one Association Trigger Item and to fit within the compartments of the Container Units.

13. The learning device of Claim 12, wherein the Information Storage Bags are made from a flexible material and include a drawstring mechanism, the bags being designed in various colours for categorization purposes.

14. The learning device of Claim 1, wherein the Container Units are rectangular boxes with dimensions allowing placement on any beam of the grid system without risk of falling, even when unevenly filled.

15. The learning device of Claim 1, wherein the grid system includes a magnetic mechanism for securing the Container Units at their respective locations within the system and each Container Unit comprises magnetic elements on its base, aligning with corresponding magnetic elements on the grid system 's beams to facilitate stable attachment.

## Patentansprüche

1. Eine Lernvorrichtung zur Erleichterung der Speicherung und des Abrufs von Informationen, wobei die Vorrichtung umfasst:
ein Gittersystem, das als dreidimensionale kubische Struktur mit einer Vielzahl von miteinander verbundenen Trägern konfiguriert ist, die eine Vielzahl von Behälteraufnahmestellen definieren;
eine Vielzahl von Behältereinheiten, wobei jede Behältereinheit dimensionsmäßig für einen lösbaren Eingriff mit dem Gittersystem an jeder der Vielzahl von Behälteraufnahmestellen angepasst ist und zur Aufbewahrung von Lernmaterialien wie Assoziationsauslöser-Elementen konfiguriert ist; und
eine Vielzahl von Informationsübersichtskarten, wobei jede Karte zur Annotation von Informationen in Bezug auf einen mnemonischen Lernprozess konfiguriert ist;
wobei das Gittersystem, die Behältereinheiten und die Informationsübersichtskarten gemeinsam einen mnemonischen Lernprozess auf der Grundlage von räumlichen und physischen Gedächtnisassoziationen ermöglichen.

2. Die Lernvorrichtung nach Anspruch 1, ferner umfassend eine Vielzahl von Assoziationsauslöser-Elementen, wobei jedes Element zur Assoziation mit spezifischem Lerninhalt und zur Aufbewahrung in den Behältereinheiten ausgewählt ist.

3. Die Lernvorrichtung nach Anspruch 2, wobei jede der Behältereinheiten interne Haken zur Organisation der Assoziationsauslöser-Elemente aufweist.

4. Die Lernvorrichtung nach Anspruch 1, ferner umfassend einen Satz von Behältertrennwänden, wobei jede Trennwand so konfiguriert ist, dass sie in die Behältereinheiten passt und jede Behältereinheit in eine Vielzahl von Fächern unterteilt.

5. Die Lernvorrichtung nach Anspruch 4, wobei jedes durch die Behältertrennwände erzeugte Fach zur Identifizierung und Kategorisierung von Assoziationsauslöser-Elementen beschriftet ist.

6. Die Lernvorrichtung nach Anspruch 1, wobei jede Informationsübersichtskarte eine vorgefertigte Struktur zur Visualisierung von Beziehungen zwischen durch Assoziationsauslöser-Elemente dargestelltem Lerninhalt aufweist.

7. Die Lernvorrichtung nach Anspruch 1, ferner umfassend eine Kartenschachtel, die zur Aufbewahrung und Organisation der Informationsübersichtskarten gemäß einem Lernplan mit verteilten Wiederholungen konfiguriert ist.

8. Die Lernvorrichtung nach Anspruch 7, wobei die Kartenschachtel Trennelemente aufweist, um die Informationsübersichtskarten basierend auf verschiedenen Phasen des Lernprozesses zu trennen.

9. Die Lernvorrichtung nach Anspruch 1, wobei die Behälteraufnahmestellen des Gittersystems mit einem Positionierungscode beschriftet sind.

10. Die Lernvorrichtung nach Anspruch 9, wobei der Positionierungscode eine Kombination aus Farben, Zahlen und alphanumerischen Positionierungssymbolen verwendet, um spezifische Standorte innerhalb des Gittersystems zu definieren.

11. Die Lernvorrichtung nach Anspruch 10, wobei der Positionierungscode eine Kombination aus Farben, die horizontale Ebenen darstellen, Zahlen, die die Tiefe angeben, und alphanumerischen Symbolen zur spezifischen Standortidentifizierung innerhalb des Systems umfasst.

12. Die Lernvorrichtung nach Anspruch 1, ferner umfassend Informationsspeicherbeutel, wobei jeder Beutel so bemessen ist, dass er mindestens ein Assoziationsauslöser-Element aufnehmen kann und in die Fächer der Behältereinheiten passt.

13. Die Lernvorrichtung nach Anspruch 12, wobei die Informationsspeicherbeutel aus einem flexiblen Material hergestellt sind und einen Kordelzugmechanismus aufweisen, wobei die Beutel zu Kategorisierungszwecken in verschiedenen Farben gestaltet sind.

14. Die Lernvorrichtung nach Anspruch 1, wobei die Behältereinheiten rechteckige Kästen mit Abmessungen sind, die eine Platzierung auf jedem Träger des Gittersystems ohne Sturzgefahr ermöglichen, selbst bei ungleichmäßiger Befüllung.

15. Die Lernvorrichtung nach Anspruch 1, wobei das Gittersystem einen magnetischen Mechanismus zur Sicherung der Behältereinheiten an ihren jeweiligen Positionen innerhalb des Systems aufweist und jede Behältereinheit magnetische Elemente an ihrer Basis umfasst, die sich mit entsprechenden magnetischen Elementen an den Trägern des Gittersystems ausrichten, um eine stabile Befestigung zu ermöglichen.

## Revendications

1. Un dispositif d'apprentissage pour faciliter le stockage et le rappel d'informations, le dispositif comprenant:
un système de grille, configuré comme une structure cubique tridimensionnelle avec une pluralité de poutres interconnectées définissant une pluralité d'emplacements de réception de conteneurs;
une pluralité d'Unités de Conteneur, chaque Unité de Conteneur étant dimensionnellement adaptée pour un engagement amovible avec le système de grille à n'importe lequel de la pluralité d'emplacements de réception de conteneurs, et configurée pour stocker des matériels d'apprentissage tels que des éléments déclencheurs d'association; et
une pluralité de Cartes de Vue d'Ensemble d'Information, chaque carte étant configurée pour annoter des informations relatives à un processus d'apprentissage mnémonique;
dans lequel le système de grille, les Unités de Conteneur et les Cartes de Vue d'Ensemble d'Information facilitent collectivement un processus d'apprentissage mnémonique basé sur des associations de mémoire spatiale et physique.

2. Le dispositif d'apprentissage de la Revendication 1, comprenant en outre une pluralité d'Éléments Déclencheurs d'Association, chaque élément étant sélectionné pour l'association avec un contenu d'apprentissage spécifique et pour le stockage dans les Unités de Conteneur.

3. Le dispositif d'apprentissage de la Revendication 2, dans lequel chacune des Unités de Conteneur comprend des crochets internes pour organiser les Éléments Déclencheurs d'Association.

4. Le dispositif d'apprentissage de la Revendication 1, comprenant en outre un ensemble de Diviseurs de Conteneur, chaque Diviseur étant configuré pour s'adapter à l'intérieur des Unités de Conteneur, divisant chaque Unité de Conteneur en une pluralité de compartiments.

5. Le dispositif d'apprentissage de la Revendication 4, dans lequel chaque compartiment créé par les Diviseurs de Conteneur est étiqueté pour l'identification et la catégorisation des Éléments Déclencheurs d'Association.

6. Le dispositif d'apprentissage de la Revendication 1, dans lequel chaque Carte de Vue d'Ensemble d'Information comprend une structure préfabriquée pour visualiser les relations entre le contenu d'apprentissage représenté par les Éléments Déclencheurs d'Association.

7. Le dispositif d'apprentissage de la Revendication 1, comprenant en outre une Boîte pour Cartes, configurée pour stocker et organiser les Cartes de Vue d'Ensemble d'Information selon un programme d'apprentissage par répétition espacée.

8. Le dispositif d'apprentissage de la Revendication 7, dans lequel la Boîte pour Cartes comprend des diviseurs pour séparer les Cartes de Vue d'Ensemble d'Information en fonction de différentes étapes du processus d'apprentissage.

9. Le dispositif d'apprentissage de la Revendication 1, dans lequel les emplacements de réception de conteneurs du système de grille sont étiquetés avec un code de positionnement.

10. Le dispositif d'apprentissage de la Revendication 9, dans lequel le code de positionnement utilise une combinaison de couleurs, de nombres et de symboles de positionnement alphanumériques pour définir des emplacements spécifiques dans le système de grille.

11. Le dispositif d'apprentissage de la Revendication 10, dans lequel le code de positionnement comprend une combinaison de couleurs représentant des niveaux horizontaux, de nombres indiquant la profondeur, et de symboles alphanumériques pour l'identification d'emplacements spécifiques dans le système.

12. Le dispositif d'apprentissage de la Revendication 1, comprenant en outre des Sacs de Stockage d'Information, chaque sac étant dimensionné pour contenir au moins un Élément Déclencheur d'Association et pour s'adapter dans les compartiments des Unités de Conteneur.

13. Le dispositif d'apprentissage de la Revendication 12, dans lequel les Sacs de Stockage d'Information sont fabriqués à partir d'un matériau flexible et comprennent un mécanisme de cordon de serrage, les sacs étant conçus dans diverses couleurs à des fins de catégorisation.

14. Le dispositif d'apprentissage de la Revendication 1, dans lequel les Unités de Conteneur sont des boîtes rectangulaires avec des dimensions permettant le placement sur n'importe quelle poutre du système de grille sans risque de chute, même lorsqu'elles sont remplies de manière inégale.

15. Le dispositif d'apprentissage de la Revendication 1, dans lequel le système de grille comprend un mécanisme magnétique pour sécuriser les Unités de Conteneur à leurs emplacements respectifs dans le système et chaque Unité de Conteneur comprend des éléments magnétiques sur sa base, s'alignant avec des éléments magnétiques correspondants sur les poutres du système de grille pour faciliter une fixation stable.
